# EUROPEAN PATENT APPLICATION

(11) **EP 1 168 805 A1**
(43) Date of publication of application: **02.01.2002**
(21) Application number: 00401747.1
(22) Date of filing: 20.06.2000
(51) Int. Cl.: H04M 15/00, H04Q 3/00

(54) **Call charging method, a related device, object and object-oriented development system**

(71) Applicant: ALCATEL, 75008 Paris (FR)
(72) Inventor: Genette, Michel Jose Claude Chislain, B-5081 Bovesse (BE)
(74) Representative: Plas, Axel

(57) **Abstract**

The call charging method, enables to charge a call under control of an Intelligent Network service. The Intelligent Network service is executed by a Service Control Point. The Service Control Point additionally determines the charge of the call, based on the result of a processed customised call charging object.

## Description

The present invention relates to a call charging method as described in preamble of claim 1 and a related call charging device as described in the preamble of claim 2.

Such a call charging method and related call charging device are already known in the art, e.g. from Annex B: Charging Scenarios supported by core INAP, pages 203-208 of the European Telecommunications Standard *"INTELLIGENT NETWORK (IN); INTELLIGENT NETWORK CAPABILITY SET 1* (*CS1); CORE INTELLIGENT NETWORK APPLICATION PROTOCOL (INAP);* PART *1: PROTOCOL SPECIFICATION"* with reference ETS 300 374-1 published in September1994. Therein, it is described that the Service Control Point after the intelligent network call set-up and/or during the call, sends a number of call parameters such as the originating number the destination number, call duration, time of day, type of day et cetera, towards a Service Switching Point. These data , amongst others, are collected by the service control point or service switching point for each call, stored in a charging record and forwarded to a billing system that processes all data from this charging record. The billing system processes the data stored in the charging record, according to a logic that amongst others looks up this data in the tables of a database, in order to determine the charge of a call. This logic for performing the charging calculations is implemented in a billing system and is executed for each call, meaning that this execution for each customer and/or subscriber is performed in the same way.

Hence it is not possible to make adaptations on a call basis in order to customise the charging for each customer by making adaptation within the billing system. Furthermore, it is quite difficult to perform any adaptations in the charging of a call, because of the complex inter-relations within the structure of all charging tables.

An object of the present invention is to provide a call charging method, a related device of the above known type but wherein the call charging determination is performed in a less complex way, easily adaptable by the intelligent network service operator and customisable for each customer and or subscriber.

According to the invention, this object is achieved by the method of claim 1, the call charging device of claim 2, the call charging object as described in claim 3 and the call charging object development system as described in claim 5.

In this way, by introducing an additional charging object, e.g. an additional customisable Intelligent Network Service Independent Block, an additional Intelligent Network service script or a kind of macro in the Service Control Point that based on at least one predetermined criterion and at least one input datum, additionally besides the normal call handling, performs the call charging determination resulting in a charging case that directly relates to the charge of the call. The call charging object may be different for each customer and/or subscriber of any Intelligent Network service, for instance by relating a charging object to a customer service subscription, to an entire service or any other Intelligent Network service level and in that sense offering a sufficient flexibility to adapt the charging object according to specific requirements of each of the subscribers and/or customers.

Another feature of the present invention is described in claim 4.

The call charging logic is built up of one or more linked together charging logic modules such as Intelligent Network Service Independent Blocks, in this way generating in a easy way a customisable call charging object.

A further feature of the present invention is described in claim 6.

The call charging object development system additionally comprises means for deploying the call-charging object.

An additional feature of the present invention is that the selecting of this predefined logic module, the linking of the selected predefined logic module and/or the adding of the charging logic specific service data to each of the selected predefined logic modules is done via an Intelligent Network Service Creation Environment SCE, as described in claim 7.

This Service Creation Environment SCE usually forms part of an Intelligent Network environment, amongst others comprising a Service Control Point SCP and a thereto belonging Service Creation Environment SCE which are interconnected via a Service Management Point SMP. The Service Creation Environment SCE is a tool with a graphical user interface which includes a repository containing a number of predefined logic module alike the Service Independent Building Blocks which are standardised according to ITU-T standards, for instance the ITU-T standard document Q.1213 "INTELLIGENT NETWORK: GLOBAL FUNCTIONAL PLANE FOR INTELLIGENT NETWORK CS-1", wherein, in the pages 3 up to 34, capability set 1, Service Independent Blocks are described, and besides this the invention consists of a number linked together specially developed logic modules supporting call charging object functionality. The logic modules can be selected from a repository alike the repository of Service Independent Blocks, using an adapted (graphical) user interface, to create a call charging logic. The graphical representation of the logic modules that are in the form of icons, facilitates an easy and surveyable call charging object creation.

Another feature of the present invention is that the selecting of the predefined Service Independent Building Blocks, the linking of the selected predefined Service Independent Building Blocks and/or the adding of mediation device specific service data to each of the selected predefined Service Independent Building Blocks is done via a Command Handling Interface, as described in claim 8.

This Command Handling Interface also usually forms part of an Intelligent Network environment as described before. This Command Handling Interface which is in an Intelligent Network environment also coupled to the Service Control Point SCP is an alternative interface enabling to select the predefined logic modules via commands, each command representing the selection of one single predefined logic module. The logic modules can again be selected from the repository, using this command-handling interface, to create a charging logic. This interface forms an interface that is more direct and has shorter response-time for each performed action compared to using a Service Creation Environment SCE.

As a result of the achievement of the earlier mentioned object also a system realising the subject method and a device developed according to the method is obtained.

The above and other objects and features of the invention will become more apparent and the invention itself will be best understood by referring to the following description of an embodiment taken in conjunction with the accompanying drawings wherein:
FIG. 1 represents an Intelligent Network IN wherein the implementation of the present invention is realised;
FIG. 2 represents the functional built-up of the service control point SCP Service Control Point SCP of FIG. 1;
FIG. 3 represents a specific call charging logic executed by the Service Control Point; and
FIG. 4 represents the functional built-up of the Service Creation Environment SCE of FIG. 1.

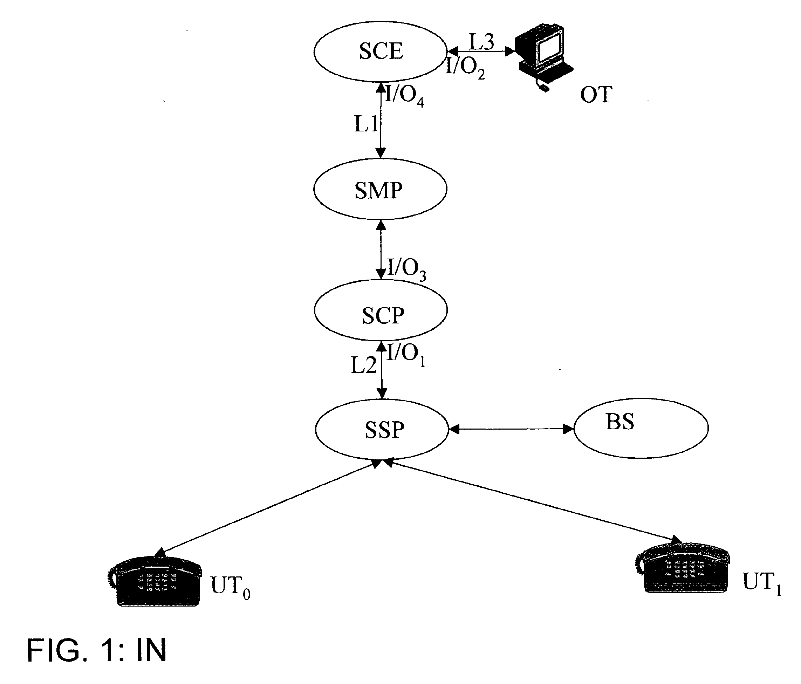

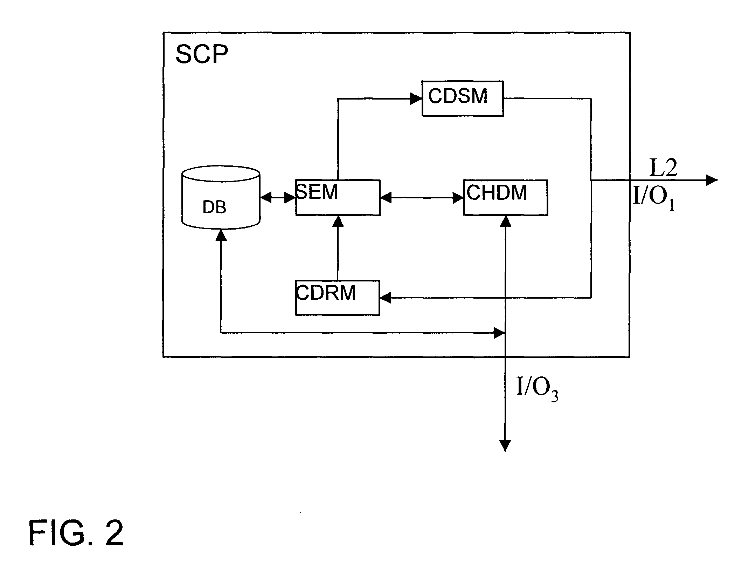

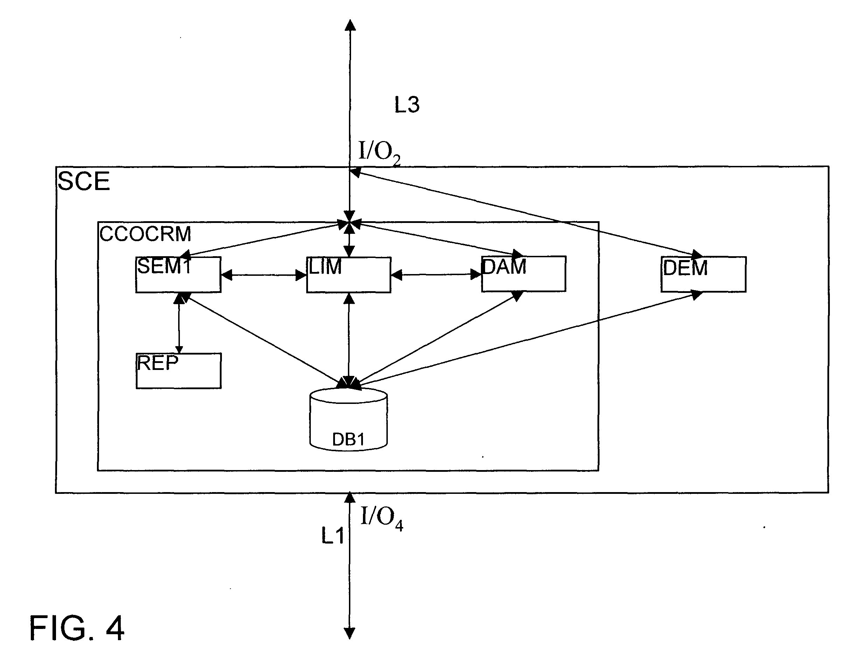

In the following paragraphs, referring to the drawings, an implementation of the present invention will be described. In the first paragraph of this description, the main elements of the Intelligent Network IN as presented in FIG. 1, wherein the call charging method is executed, are described. This part is succeeded by a description of all interconnections of the former mentioned Intelligent Network IN elements. Further, special attention will be drawn to the components of the service control point SCP and the components of the Service Creation Environment SCE as presented in the respective figures, FIG. 2 and FIG. 4. In the succeeding paragraph, all connections between the before mentioned components of the Service Control Point SCP and the Service Creation Environment SCE are defined.

In the subsequent paragraph the actual execution of the call charging method is described, which is followed by a description of the development of a call-charging object using such a Service Creation Environment SCE.

The first essential element of the Intelligent network IN, further referred to as IN, is the service control point SCP, which is the central control of the IN executing a service if a calling party makes an IN-call by dialling a dedicated IN telephone number. Additionally there is a service switching point SSP that at first handles the detection of the dialling of the dedicated IN telephone number, and if such number is dialled it triggers the service control point SCP to start the execution of the corresponding service. Further the service switching point SSP handles the establishment of the telephone connection between the calling party and the eventual called party. Additionally there is a Service Creation Environment that handles service creation, subscriber - and/or subscription entry. Additionally there is a Service Management Point SMP that handles the service management together with the subscriber and subscription management in the service control point SCP of the services deployed within the Service Control Point. In this special case the Service Creation Environment SCE is further adapted to create a call-charging object for each Intelligent Network subscription and to enable the deployment thereof within the Service control Point SCP. Additionally to the Service Creation Environment SCE there is an operator terminal OT which is a generally known Personal Computer adapted to execute a graphical interface of the Service Creation Environment SCE. The subsequently to be mentioned network element, is the Billing System BS which takes care of processing all relevant call data that is sent by the Service Control Point SCP in order to determine the charge of each IN-call in order to prepare the bills for each of the customers. Finally there are two user terminals UT₀ and UT₁ that are generally known telephone terminals. In order to keep the description simple it is chosen to only describe one Service Switching Point SSP and two user terminals UT₀, UT₀₁ although there normally will be more than one Service Switching Point and a plurality of user terminals present in such an Intelligent Network IN.

The service control point SCP is connected to the service switching point SSP over a N7 connection L2. The user terminals UT1 and UT2 are also coupled to the service switching point SSP, both via a generally known twisted pair copper wire used for PSTN telephone connections. The additional Billing System BS is coupled to the Service Switching Point SSP. The Service Creation Environment SCE is on one side coupled to the Service Management Point SMP over an Ethernet link L1 and on the other side over a second ethernet link L3 to the operator terminal OT. Finally the service control point SCP is coupled to the Service Management Point over a TCP/IP link.

The Service Control Point SCP, as presented in FIG. 2, amongst other means contains a service executing means SEM that is able to execute the present Intelligent Network service at service invocation. Subsequently there is a database DB containing the Intelligent network service and all service data such as subscriber and subscription data. Further there is a call data reception means CDRM that is able to receive call data such as the calling party number, dialled number et cetera, sent by the Service Switching Point SSP at call set-up. Additionally there is a call data sending means CDSM adapted to send call data towards the Service Switching Point. This call data consists of data to enable the Service Switching Point to handle the call, that is establishing a connection between both telephone terminals UT₀, UT₁ in this case. The call data additionally may contain call charging information. Additionally the Service Control Point SCP comprises a charging determination means CHDM that is adapted to hold one or more charging logics, such as the one presented in FIG. 4, which is executable by the service executing means SEM in order to obtain the cost of the corresponding handled IN-call.

This call charging script consists of a kind of decision tree wherein based on a predetermined selection of call data parameters the decision tree is passed through following a certain branch of the tree. At the end of each branch a tariff code is present representing the charge of the corresponding call.

The tariff code is derived from the call charging logic if the entire branch is passed through and the end of the branch is reached.

The call data reception means CDRM has an input-terminal that is at the same time an input/output-terminal I/O₁ of the Service Control Point SCP and on the other hand the call data reception means CDRM is coupled with an output to an input of the service executing means SEM. The service executing means SEM at first is coupled over a bi-directional link with database DB and besides the service executing means SEM is coupled with an output to an input of the call data sending means CDSM. The call data sending means CDSM has an output-terminal that is at the same time the input/output-terminal I/O₁ of the service control point SCP. Additionally the service executing means SEM is coupled over a bi-directional link to the call charging data determination means CHDM. Finally the charging determination means CHDM and the database DB both have an input/output terminal that is at the same time an input/output terminal I/O₃ of the service control point SCP.

Additionally, the Service Creation Element SCE, as presented in FIG. 4, amongst other means comprises a call charging object creation means CCOCRM, that is able to create a call charging object, supporting a call charging object functionality. The charging object creation means CCOCRM, in its turn consists of a selecting means SEM1 that is adapted to select the predefined charging logic modules from a kind of repository REP containing all possible predefined charging logic modules. Further there is a linking means LIM that is adapted to link the selected predefined charging logic modules together in a predefined order to create a call charging object logic and a data adding means DAM that is adapted to add call charging object specific data to each predefined charging logic module of the call charging object.

At last the Service Creation Environment SCE contains a service deploying means DEM that is adapted to deploy an intelligent network service and additionally the call charging object by processing the call charging object together with the call charging object specific data in order make it executable at the Service Control Point SCP.

The selecting means SEM1 is coupled to the Linking means LIM via a bi-directional link and the linking means LIM in its turn is coupled to the data adding means DAM, again via a bi-directional link. All three means of the call charging creating means CCOCRM together with the deploying means DEM are coupled to database DB1 via the respective bi-directional communications links. They are at the same time coupled to an Input/Output terminal I/O₂ of the Service Creation Environment SCE. The repository REP is coupled to the selecting means SEM1 over a bi-directional link. At last, the Service Creation Environment SCE is coupled to the Service Management Point SMP over a communication link L1.

The Service Management Point SMP, further referred to as SMP, in this embodiment, takes care of the service management function, like management concerning the service independent Intelligent Network platform, management of operator access and management of the service including the employment of the call charging object.

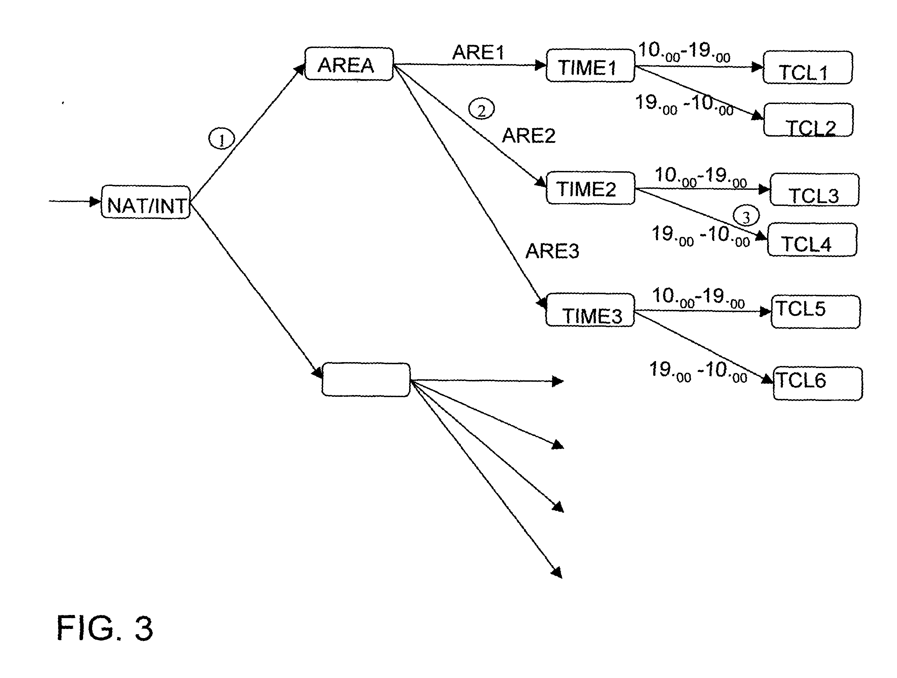

In order to explain the operation of the present invention it is assumed that a user at user terminal UT₀ dialled a dedicated IN telephone number. The Service Switching Point SSP looks up this dialled number in a triggering-table of the Service Switching point SSP containing all subscribed IN service numbers. If the IN telephone number is found in the triggering table, call data like the calling party number are sent to the Service Control Point SCP. Subsequently the service at the Service Control Point SCP will be invoked and starts executing the Intelligent Network service. At a certain moment of time during the IN service executing the service executing means SEM, in co-operation with the call charging determination means CHDM, starts running a specific call charging script as presented in FIG. 3, related to the subscription of a customer,. This call charging script containing a kind of decision tree wherein based on a predetermined selection of call data parameters the decision tree is passed through following a certain branch of the tree.

At this stage it is assumed that the call data received by the call data reception means CDRM at least comprises a calling party number. At first, module NAT/INT determines if the calling party number is a national or a, foreign, international telephone number. Here it is assumed that it is dealt with a national telephone number and as a consequence the upper branch 1 is selected. Subsequently, module AREA analyses the calling party number is and compares it with a table containing ranges of telephone numbers together with a corresponding area code. Subsequently it is assumed that the calling party number corresponds to area 2 ARE2. And consequently, branch 3 is chosen. Then based on the system clock, the module TIME2, chooses branch 4, assumed that the current time is between 20.00 O'clock. This results in the activation of module TCL4 that stores the tariff class 4 TCL4 as the tariff code. In the end of processing the charging script, the result is that the corresponding call has a charge as defined by tariff class 4 TCL4

The tariff code TCL4 at the end of the branch of the decision tree passed through, is derived from the charging script and forwarded, to the call data sending means CDSM, that in its turn forwards the tariff code together with the call data necessary for call handling or call set-up towards the Service Switching Point SSP. Using these data the Service Switching Point handles the call by, by establishing a call between the user terminal UT₀ and user terminal UT₁ and subsequently forwards the tariff code towards billing system BS that determines the charging cost out of the tariff code TCL4 together with the duration of the call and possibly other relevant charging parameters.

A call charging logic is as previously described and presented in FIG. 3, in this embodiment, is developed using a Service Creation Environment as presented in FIG. 4. Using the selecting means SEM1 via a graphical interface displayed on the screen of the operator terminal OT, the charging logic modules as presented in FIG. 3 are picked one by one from the repository REP. At first, the logic module NAT/INT differentiates on the incoming calling line identity, the second module AREA, differentiates on a range of national telephone-numbers, each corresponding to a specific area ARE1, ARE2, ARE3. The third group of charging logic modules TIME1, TIME2 and TIME3 in its turn differentiate based on time of the day, all choose the upper outlet in case the current time is in the time range 10.₀₀-19. ₀₀ O'clock, and choose the lower outlet if the current time is within the time-range 19.₀₀.10.₀₀ O'clock. Finally the charging logic modules TCL1, TCL2, TCL3 TCL4, TCL5 and TCL6 are logic modules, each containing a specific charging case where the charging case refers to a amount of money per minute or for instance per call.

Secondly all mentioned and other charging logic modules are linked together, using the linking means via the a graphical interface displayed on the screen of the operator terminal OT, in the order wherein the call data is to be analysed in order to obtain the correct charge case for a call.

Finally, the specific data such as the country code for the logic modules NAT/INT, the time-range for the respective of charging logic modules TIME1, TIME2 and TIME3 and the respective charging cases for the corresponding charging logic modules TCL1, TCL2, TCL3 TCL4, TCL5 and TCL6 are added to each of the relevant charging logic modules by the data adding means DAM using the same a graphical interface displayed on the screen of the operator terminal OT.

Finally, the deployment means DEM handles the deployment of the call charging object by processing the call charging object together with the call charging object specific data in order make it executable at the Service Control Point SCP followed by the installation of the processed call charging object at the service control point under control of the service management point SMP.

Although the above embodiments of the invention have been described by means of functional blocks, their detailed realisation based on their functional description should be obvious for a person skilled in the art and is therefore not described.

While the principles of the invention have been described above in connection with specific apparatus, it is to be clearly understood that this description is made only by way of example and not as a limitation on the scope of the invention, as defined in the appended claims.

## Claims

1. Call charging method, for charging a call under control of an Intelligent Network service executed by a Service Control Point (SCP) **CHARACTERISED IN THAT** said Service Control Point (SCP) determines the charge of said call, based on the result of a processed customised call charging object.

2. Call charging device, for charging a call under control of an Intelligent Network service executed by a Service Control Point (SCP), **CHARACTERISED IN THAT** said call charging system comprises a customised call charging object adapted to be executed by said Service Control Point (SCP) to determine the charge of said call.

3. Call Charging object, adapted to be executed by a Service Control Point (SCP), said charging object comprising a call charging logic, adapted to be processed together with at least one predetermined input datum and resulting in a charging case.

4. Call charging object according to claim 3, wherein said call charging logic consists of at least one predetermined charging logic module.

5. A call charging object development system (SCE), for developing a call charging object, to be used for charging a call under control of an Intelligent network service executed by a service control point (SCP), said system comprising the following means:
a. call charging object creation means (CCOCRM), adapted to create a call-charging object, supporting a call charging object functionality, said call charging object creation means (CCOCRM) consisting of the following means:
a1. selecting means (SEM) adapted to select at least one predefined logic module;
a2. linking means (LIM), coupled with an input to an output of said selecting means (SEM1) and adapted to link said at least one predefined logic module together in a predefined order to create a call charging object logic; and
a3. data adding means (DAM), coupled with an input to an output of said linking means (LIM) and adapted to add call charging object specific data to said at least one predefined logic module of said call charging object.

6. A call charging object development system (SCE), according to claim 5, wherein said call charging object development system (SCE) additionally comprises a service deploying means (DEM), coupled with an input to an output of said call charging object creation means (CCOCRM), and adapted to deploy said call charging object by processing said call charging object together with said call charging object specific data.

7. A call charging object development system according to claim 5, whereof at least one of said selecting means (SEM), said linking means (LIM) and said data adding means (DAM) is comprised in a Service Creation Environment (SCE).

8. A call charging object development system according to claim 5, whereof at least one of said selecting means (SEM), said linking means (LIM) and said data adding means (DAM) is comprised in a Command Handling Interface.
